# EUROPEAN PATENT SPECIFICATION

(11) **EP 4 458 781 B1**
(45) Date of publication and mention of the grant of the patent: **23.09.2026**
(21) Application number: 22914160.1
(22) Date of filing: 09.12.2022
(51) Int. Cl.: C03B 5/235, C03B 5/03, F27B 14/06, F27B 14/14, F27B 3/20, F27D 99/00

(54) **USE OF A MELTING DEVICE FOR MELTING MATERIAL**
VERWENDUNG EINER SCHMELZVORRICHTUNG ZUM SCHMELZEN VON MATERIAL
UTILISATION D'UN DISPOSITIF DE FUSION POUR FAIRE FONDRE UN MATÉRIAU

(30) Priority: 30.12.2021 CN 202111647596
(43) Date of publication of application: 06.11.2024
(73) Proprietor: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventor: TSIAVA, Remi, 78350 Les Loges-en-Josas (FR); YAN, Tao, Shanghai 201108 (CN)
(74) Representative: Air Liquide
(86) International application number: PCT/CN2022/137993
(87) International publication number: WO 2023/124905

(56) References cited:
- CN-A- 101 980 976
- CN-A- 105 189 373
- CN-A- 106 746 491
- CN-A- 106 746 491
- CN-A- 109 336 364
- CN-A- 110 167 890
- CN-A- 110 981 164
- CN-A- 114 294 951
- US-A1- 2005 039 491
- US-A1- 2013 086 951
- US-A1- 2020 262 731

## Description

### Technical Field

The present invention relates to the field of material melting, in particular to the use of a melting device for melting materials such as glass and metal, for example a melting furnace or a kiln, etc.

### Background Art

A conventional method of melting materials is to use a burner to heat and melt a material being heated in a melting device (e.g. a melting furnace). A burner is a device that converts an oxidant and a fuel to thermal energy by the chemical reaction of combustion; it conventionally employs flame radiation heating or indirect heating (with the heat of flame combustion being transferred via a heat transfer medium to the material being heated), and has the characteristics of high heat emission, low thermal efficiency and high energy consumption.

Typically, taking the melting of glass as an example, glass is made from a mixture of raw materials such as silicate, basalt, limestone, soda ash and other components in secondary quantities. When melting glass, these raw materials are added to a glass melting furnace, and melted to a liquid state at a temperature of about 1250°C - 1500°C; a forming process is then provided for the melt. Depending on the intended use of the melt, e.g. glass or fibers for various applications, further melting and refining steps are performed before the forming process. A conventional glass melting furnace comprises a burner that produces a flame in a space between the surface of the glass melt and the top of the melting fumace, and heat is transferred to the glass melt by radiation from the material of the top and the flame itself. A large amount of energy is consumed in the process of heat transfer. In high-temperature manufacturing processes such as glass melting, the abovementioned problems of high heat emission, low thermal efficiency and high energy consumption which are associated with the flame heating method of a conventional burner will be even more severe.

In recent years, CO₂ emissions have become a major topic attracting widespread attention in the international community. Everyone is working hard to find solutions for reducing CO₂ emissions, and one of the main approaches is to reduce CO₂ emissions by reducing energy consumption and increasing the energy efficiency.

As one solution for Reducing Emissions, melting or handling materials (e.g. glass, metals and solid waste, etc.; a description is given below taking glass as an example) by electric heating is an obvious approach. As used herein, the expression "electric heating" means a heating method in which electrical energy is converted to thermal energy in a medium being heated such as glass liquid, by means of an apparatus such as electrodes, using electric power as an energy source, wherein the medium being heated takes part in the electricity conduction process and heats up. Since electric heating directly causes the medium being heated to heat up, and does not involve combustion of fuel, it has high thermal efficiency, low heat loss and low emissions. However, in the process of using electrodes to perform electric heating, the phenomenon of ion cluster segregation will occur in the glass melting furnace (i.e. negative ions in the glass melt gather at the anode, while positive ions gather at the cathode). This makes it difficult to form the desired melt flow for homogenizing the glass liquid in the glass melt, and may ultimately make it impossible to obtain a high-quality glass product. Furthermore, ion cluster segregation sill also aggravate erosion of refractory material in the glass melting furnace. In addition, the high cost of the electric heating method is also a factor obstructing its adaptation and wider replication.

Another solution for Reducing Emissions is submerged combustion, in which a submerged burner is generally disposed below the surface of the raw materials for glass. Submerged burners may be mounted on a side wall and/or the bottom of the glass melting furnace; there are also some submerged burners that may be mounted at the top of the furnace, but with their nozzles submerged in the glass melt. In the case of a submerged burner, the flame and combustion products generated by combustion of the fuel and oxidant pass through the glass melt and come into direct contact therewith, so the heat transfer effect is much more effective than in the method of radiation heating by a flame above the glass melt surface. Thus, heat transfer to refractory material in the glass melting furnace and heat loss in flue gases are reduced. This can reduce fuel consumption and thus reduce CO₂ emissions. In addition, NOx emissions are also reduced during the combustion process due to the lower temperature in the combustion chamber above the glass melt. Further, the combustion products with high flow speed generated by the oxidant and fuel enter the glass melt, and gases generated in the submerged combustion process expand, causing the raw materials for glass to rapidly melt and develop considerable turbulence, thus making it easier for the molten glass to be mixed uniformly. This can avoid or reduce the need for a mechanical stirrer, and heat transfer between cold melt and hot melt is more effective. Moreover, submerged burners have a smaller size, higher production efficiency and lower melting furnace installation costs than conventional burners disposed above the glass melt. However, while producing considerable turbulence in the glass melt, submerged combustion is also highly likely to generate bubbles of various kinds (large bubbles and micro-bubbles). This will adversely affect the quality of the final glass, and it is often necessary to additionally perform after-treatment in order to obtain a glass product of satisfactory quality. Of course, in cases where the requirements regarding bubble content are lower (for example, the number of bubbles exceeding 0.1 mm in diameter in every 100 grams of glass can be greater than 10), the requirements regarding such additional after-treatment may be lowered, but this is only for final products with lower requirements regarding bubble content.

US2020262731 A1 discloses a glass furnace heated by elelctrodes and submerged burners, whereby the formation of a hot spot is elaborated. CN106746491 A also teaches a glass furnace heated by elelctrodes and submerged burners.

The objective of the present invention is resolve at least one of the abovementioned problems and/or other shortcomings in the prior art.

### Summary of the Invention

The present invention relates to the use of a melting device for melting material as defined in claim 1.

According to the present invention, the submerged burner and the electric heater are configured such that a hot point in the melting space is located downstream of the submerged burner in a melt flow direction, the melt flow direction being a direction in which the material melt flows in the melting space and is discharged from the melting space.

According to an exemplary embodiment of the present invention, in said melt flow direction in which the material melt flows in the melting space and is discharged from the melting space, the submerged burner may be disposed upstream of the electric heater.

According to an exemplary embodiment of the present invention, the submerged burner and the electric heater may be configured such that, of the energy used to heat and melt material, 50% or more and preferably 70% - 80% comes from the electric heater, and less than 50% and preferably less than 20% comes from the submerged burner.

According to an exemplary embodiment of the present invention, the melting device may further comprise a burner disposed above a surface of a material melt, the burner being configured to supply a portion of the energy used to heat and melt material other than energy supplied by the submerged burner and the electric heater, said portion being 10% for example.

According to an exemplary embodiment of the present invention, the submerged burner may be configured such that fuel and oxidant supplied thereto are split into a first portion supplied continuously and a second portion supplied intermittently, a flow rate of the first portion being less than a flow rate of the second portion, and preferably, a ratio of flow rates of the first portion and the second portion being adjustable, and/or a supply frequency and/or supply duration of the second portion being adjustable.

According to an exemplary embodiment of the present invention, the submerged burner may use hydrogen as fuel.

According to an exemplary embodiment of the present invention, the at least one submerged burner may comprise multiple submerged burners protruding from the bottom wall into a material melt, and heights to which the multiple submerged burners protrude from the bottom wall increase successively in the melt flow direction.

According to an exemplary embodiment of the present invention, upstream of the electric heater, the bottom wall may comprise multiple protrusions protruding into a material melt, and heights of the multiple protrusions increase successively in the melt flow direction.

According to an exemplary embodiment of the present invention, the submerged burner may extend from a top end of each said protrusion.

According to an exemplary embodiment of the present invention, a cooling medium nozzle or pipeline for cooling the submerged burner may be accommodated in the protrusion.

According to an exemplary embodiment of the present invention, the at least one submerged burner may comprise two or more submerged burners, which may share a cooling system and/or a system for supplying fuel and oxidant.

According to an exemplary embodiment of the present invention, the material melt may be molten glass, molten metal, molten resin, or solid waste in a molten state.

According to an exemplary embodiment of the present invention, the submerged burner may comprise a fuel pathway and an oxidant pathway, which are configured to respectively discharge fuel and oxidant to the outside of the submerged burner so that the fuel and oxidant mix outside.

According to an exemplary embodiment of the present invention, at least one of the fuel pathway and the oxidant pathway may be configured such that the discharged fuel and/or oxidant forms a rotational flow.

The melting device used according the present invention has at least the following technical effects: by combining electric heating with submerged combustion to heat and melt material, an unexpected result is achieved whereby the strengths of the two heating methods are added while offsetting their weaknesses; firstly, submerged combustion is used to mitigate the problem of ion cluster segregation in the electric heating scheme, thus increasing the level of homogenization of the glass liquid, and secondly, the problem of bubbles in the submerged combustion scheme is alleviated by electric heating; at the same time, the original advantages of these two heating methods are retained as much as possible, thereby providing a production apparatus and method for obtaining a high-quality product of material melting at a low cost.

### Brief description of the drawings

Various features and effects of the present invention are described in detail below with reference to the drawings, through non-limiting embodiments. Here, the drawings are merely schematic, and not necessarily drawn to scale. In addition, they only show those parts which are necessary for expounding the present invention; other parts might be omitted or only mentioned in simple terms. That is, in addition to the components or key elements shown in the drawings, the present invention may also comprise other components or key elements. In the drawings:
Fig. 1 is a transverse section of an embodiment of a melting device used according to of the present invention.
Fig. 2 is a longitudinal section of an embodiment of a melting device used according to of the present invention.
Fig. 3 is a longitudinal section of a melting device used according to another embodiment of the present invention.
Fig. 4 is a longitudinal partial section of a melting device used according to another embodiment of the present invention.
Fig. 5 is a schematic drawing of a submerged burner used according to an embodiment of the present invention.
Fig. 6 is a schematic drawing of a submerged burner assembly used according to an embodiment of the present invention.

### Detailed Description of the Invention

Exemplary embodiments of the present invention are described in detail below with reference to the drawings. In the description below, many specific details are expounded to give those skilled in the art a more comprehensive understanding of the present invention. However, as will be obvious to those skilled in the art, the present invention may be implemented without some of these specific details. It should also be understood that the present invention is not limited to the specific embodiments presented.

Thus, the aspects, features, embodiments and advantages below merely serve an illustrative purpose, and should not be regarded as key elements or definitions of the claims, unless clearly set out in the claims.

In the explanation of particular embodiments below, it must be understood that orientational or positional relationships indicated by terms such as "up", "down", "front", "rear", "left", "right", "vertical", "horizontal", "top", "bottom", "inner" and "outer" are based on the orientational or positional relationships shown in the drawings, and are merely intended to facilitate and simplify the description of the present invention, without indicating or implying that the apparatus or element referred to must have a specific orientation or be constructed and operated in a specific orientation, and therefore should not be construed as limiting the present application.

In addition, the terms "first" and "second" are merely used for descriptive purposes, and must not be interpreted as indicating or implying relative importance or implicitly specifying the quantity of the technical feature indicated. Hence, a feature defined with "first" and "second" may explicitly or implicitly include one or a plurality of the feature. In the description of the present invention, "multiple" means two or more than two, unless otherwise clearly specified.

As used herein, the term "fuel" refers to a gaseous fuel, a liquid fuel or a solid fuel that can be used interchangeably or in combination with each other. If it is at least partially in the gaseous form, it can be introduced directly into the burner. If it is in the liquid or the solid form, it is introduced in the vicinity of the burner. The gaseous fuel may be natural gas (mainly methane), propane, hydrogen, syngas, biomass gas or any other hydrocarbon and/or sulfur-containing compound and/or nitrogen-containing compound. The solid or liquid fuel may mainly be any compound in a carbon-containing and/or hydrocarbon and/or sulfur-containing form. Those skilled in the art can decide the way in which the gaseous, liquid or solid fuel is introduced as required; it is not the intention of the present invention to impose any limitations in this regard.

As used herein, the term "nozzle" refers to a component which is positioned at an extremity of the burner and which ejects fuel and oxidant and causes them to burn; it may be an independent component, or a component formed integrally with another component.

As used herein, the terms "fusion" and "melting" comprise an operation in which a medium being heated is heated from an essentially solid state to an essentially liquid state.

As used herein, the term "melt" or "molten material" refers to a substance obtained by melting which may contain inorganic components, metals or organic components, etc., and may be molten glass, molten metal, molten resin, molten waste, etc.

As used herein, the terms "glass melt" and "glass liquid" refer to a composition for making a glass product; this composition may exist in any state between an essentially solid state and an essentially liquid state, including the essentially solid state and the essentially liquid state; such a state is between the raw materials and molten glass (including the raw materials and molten glass), and includes any degree of partial melting between the raw materials and molten glass.

As used herein, the term "axial" refers to the direction of an axis of rotation, an axis of symmetry or an approximate centreline that is essentially parallel to the direction of a central axis of the burner. In the following description, raw materials for glass are used as an example of the material being heated. However, those skilled in the art will understand that the material being heated may also be any other substance that needs to be heated and melted, e.g. metal, solid waste or other solid substances, etc.

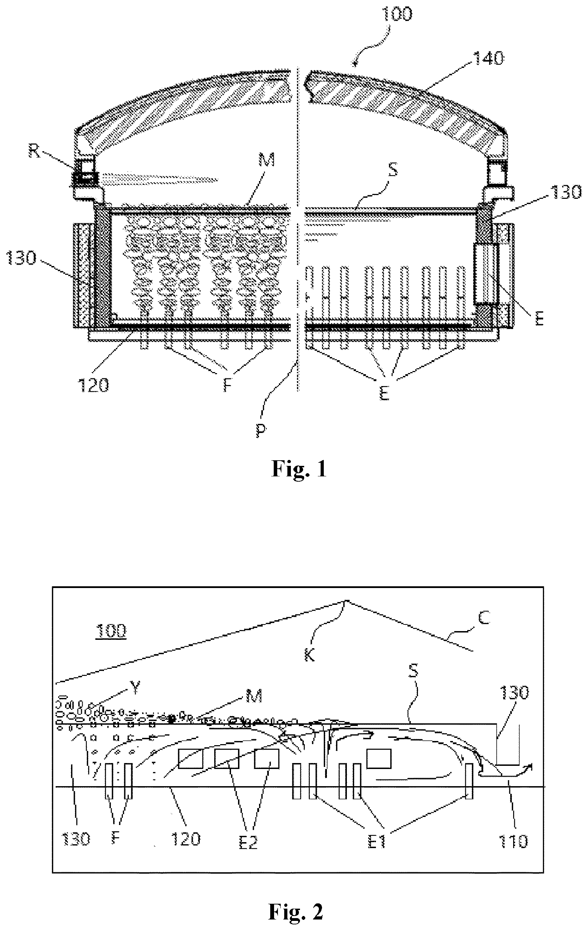

Figs. 1 and 2 are schematic drawings of a melting device used according to an embodiment of the present invention (shown here as a glass melting furnace by way of example). In the glass melting furnace 100, after being introduced into the furnace through a feeding port (not shown), raw materials for glass are heated and melted to form a glass melt or glass liquid which, after a certain extent of clarification and homogenization, etc., is finally discharged from the outlet 110 shown in Fig. 2 and enters the next process step, for example after-treatment or forming.

The glass melting furnace 100 may comprise a melting space enclosed by at least a bottom wall and a side wall, and the raw materials for glass are heated and melted in the melting space. In the embodiment shown, the melting space is a substantially cuboid-shaped space enclosed by a bottom wall 120 and four side walls 130, for example. Fig. 1 is a transverse section taken along a direction parallel to a short side wall of the cuboid; Fig. 2 is a longitudinal section taken along a direction parallel to a long side wall of the cuboid. As shown in Fig. 2, the outlet 110 is disposed at the bottom of one of the short side walls of the cuboid, while the feeding port is disposed close to the other short side wall opposite said short side wall; thus, raw materials Y for glass that have just been fed into the furnace are gathered close to said other short side wall. As the raw materials for glass melt continuously, the glass melt forms a melt surface (liquid surface) S in the melting space, and flows generally towards the outlet 110, finally being discharged from the melting space through the outlet 110; the melt flow direction thus formed is substantially the direction from left to right in Fig. 2, parallel to the long side walls of the melting space. Correspondingly, the position or region close to the left side and remote from the outlet 110 in Fig. 2 is upstream in the melt flow direction, while the position or region close to the right side and close to the outlet 110 is downstream in the melt flow direction.

In order to heat and melt the raw materials for glass, the glass melting furnace 100 comprises at least one submerged burner F and at least one electric heater E. Multiple submerged burners F are shown at the left side of a longitudinal central plane P of the glass melting furnace 100 in Fig. 1; they may be in the common form of spray lance, and for example are disposed on the bottom wall 120 of the glass melting furnace 100, extending upward from the bottom wall 120 into the glass melt. Combustion of fuel and oxidant which are led out of a nozzle at an extremity of the submerged burner occurs, and the flame and combustion products thus generated pass through the glass melt and come into direct contact therewith, thus achieving a good heating effect. Furthermore, it is also possible to provide one or more submerged burner F on a side wall of the glass melting furnace 100. Multiple electric heaters E are shown at the right side of the longitudinal central plane P of the glass melting furnace 100 in Fig. 1; these may be realized using electrodes for example. In the embodiment shown, the electric heaters E may comprise multiple electrode rods E1 extending from the bottom wall 120 of the glass melting furnace into the glass melt, and optionally multiple electrode plates E2 disposed on a side wall 130 of the glass melting furnace. Once energized, the electric heaters E generate heat by means of current formed by conductive ions in the glass melt, so as to heat the glass melt directly. In the present invention, two heating methods are used in combination in the glass melting furnace, specifically the submerged burners F and the electric heaters E, in order to melt the raw materials for glass. Thus, firstly, the submerged burners F cause considerable turbulence in the glass melt during operation, while generating a large number of large and small bubbles; these can not only achieve the beneficial effects of glass melt clarification and homogenization in the melting space (thereby reducing the need for a mechanical stirrer, e.g. replacing bubblers or other stirring devices commonly used in glass production), but also tend to form or promote glass melt flow in the melting space. This enhanced glass melt flow is just right for helping to reduce ion cluster segregation which occurs around the electric heaters E. Alleviation of the problem of ion cluster segregation can improve the glass homogenization effect in the region of the electric heaters E, so as to improve the quality of the final glass product, and can also reduce erosion of the refractory material of the melting furnace, thereby increasing the service life of the melting furnace. Secondly, after reaching the region of the electric heaters E, the glass melt flowing in the melting space and carrying bubbles due to the action of the submerged burners will be subjected to the high-temperature heating effect provided by the electric heaters E; this helps to encourage the bubbles in the glass melt to float up to the glass liquid surface and escape, thereby reducing the bubble content in the glass melt and improving the quality of the final glass product.

As can be seen, the heating scheme combining submerged burners with electric heaters suppresses the major shortcomings originally present in these two heating methods. At the same time, the advantages of submerged combustion and electric heating (high heating efficiency, low heat loss, low heat discharge, a high degree of glass homogenization, etc.) are retained, and a good balance is achieved in terms of cost.

In an embodiment, the submerged burners F and electric heaters E may be configured such that a hot point in the melting space is located downstream of the submerged burners F in the melt flow direction. That is to say, the numbers of submerged burners F and electric heaters E as well as their powers and the ways in which they are arranged, etc. are controlled such that a temperature peak value in the glass melting furnace occurs in a downstream region. Thus, the glass melt carrying bubbles and flowing downstream toward the melting furnace outlet from the region provided with submerged burners F will encounter the temperature peak value in the downstream region, and the bubble-removing effect which high temperature has on the glass melt can thus be enhanced or optimized. An exemplary temperature curve C is shown above the glass liquid surface S in Fig. 2; as can be seen, the temperature in the glass melting furnace/melting space gradually rises to a peak value point (hot point) K toward the downstream direction from an upstream region, and then gradually falls toward the downstream direction. The area below point K may correspond to a position where multiple electric heaters E (electrodes) are concentrated. Before reaching point K, the bubbles in the glass melt float up to the glass liquid surface continuously to become foam M as the temperature gradually rises, and the strongest bubble-removing effect is attained at point K where the temperature is highest; thereafter, the foam M and the number of bubbles can be greatly reduced. Of course, those skilled in the art will understand that in cases where the requirements regarding bubble contents in the prepared glass product are lower (for example, the number of bubbles exceeding 0.1 mm in diameter in every 100 grams of glass can be greater than 10), the hot point in the melting space may also be located upstream of the submerged burners F in the melt flow direction. In this case, the bubble-removing effect which the hot point has on the glass melt flowing generally downstream toward the melting furnace outlet is, overall, inferior to that of the scheme in which the hot point is disposed downstream of the submerged burners, but can still help to remove bubbles from locally back-flowing glass melt, and this is sufficient for use in scenarios in which the requirements regarding bubble contents are not high.

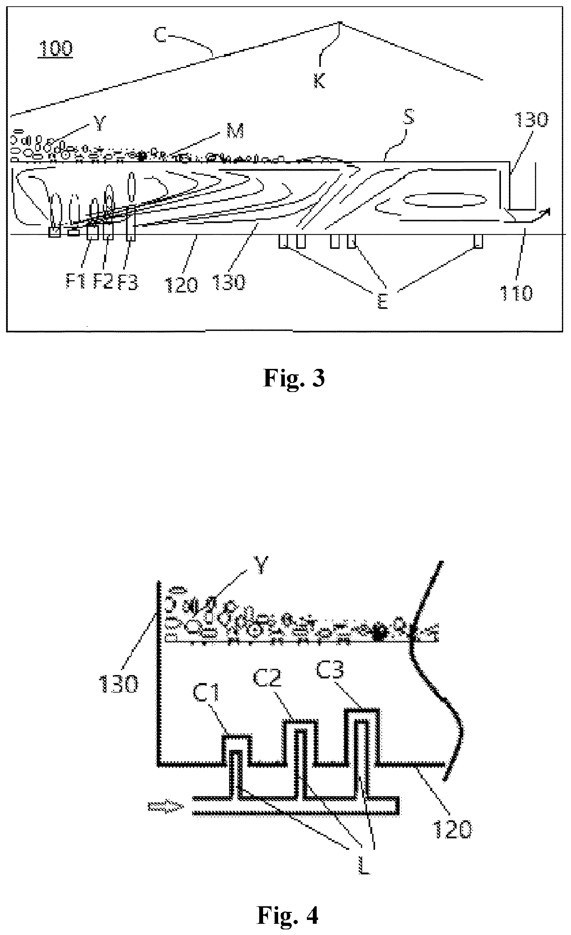

In an embodiment, as shown in Figs. 2 and 3, the submerged burners F may be disposed upstream of the electric heaters E in the melt flow direction. Thus, the submerged burners F disposed in an upstream region, through the turbulence and bubbles aroused thereby, tend to enhance the glass melt flow that was originally flowing generally downstream toward the melting furnace outlet; after reaching a downstream region, this enhanced glass melt flow can more effectively reduce ion cluster segregation that occurs around the electric heaters E in the downstream region. Furthermore, having the electric heaters E disposed downstream of the submerged burners F helps to form a state in the melting space whereby the temperature gradually rises in the downstream direction until the hot point is reached; thus, when the glass melt carrying bubbles flows generally downstream from the upstream region where the submerged burners F are located, bubbles can be removed more effectively by means of the temperature rise and hot point provided by the electric heaters. Of course, the present invention is not limited to a scheme in which the submerged burners are disposed upstream of the electric heaters. The submerged burners may also be disposed downstream of the electric heaters, but in this case, the effect in terms of eliminating ion cluster segregation and removing bubbles is inferior to that of the scheme in which the submerged burners are disposed upstream of the electric heaters; however, this is suitable for scenarios in which the requirements regarding glass product quality are not very high. Alternatively, in a situation in which multiple submerged burners F and/or electric heaters E are provided, the submerged burners and the electric heaters may also be arranged alternately with each other in the melt flow direction.

In an embodiment, the submerged burners F and electric heaters E are configured such that, of the energy used to heat and melt the raw materials for glass, 50% or more and preferably 70% - 80% comes from the electric heaters E, and less than 50% and preferably less than 20%, e.g. 15% comes from the submerged burners. That is, the electric heaters are used as the main source of heat for glass melting, with the submerged burners acting as a secondary heat source. Research has shown that if submerged combustion accounts for too high a proportion of the heat, a large number of bubbles will appear in the glass melt, which are difficult to remove to a satisfactory level even by downstream electric heating, and this is unfavorable for the quality of the final glass product; or an additional after-treatment process step for eliminating bubbles needs to be added in order to obtain a glass product of the desired quality. Those skilled in the art will understand that in cases where the requirements regarding bubble contents in the manufactured glass product are low (for example, the number of bubbles exceeding 0.1 mm in diameter in every 100 grams of glass can be greater than 10, e.g. when preparing glass wool, glass fiber filaments for thermal insulation, etc.; in which case the requirements regarding additional after-treatment of the glass liquid can be lowered) or an additional bubble after-treatment process step is provided downstream of the glass melting furnace, the proportion of the heat accounted for by submerged combustion may be suitably increased slightly, otherwise decreased slightly. In addition to the submerged burners F and electric heaters E, as shown in Fig. 1, a conventional burner R may also be provided as an auxiliary heat source in a space between the glass liquid surface S and an arched crown 140 above the glass melting furnace 100; a flame ejected by this burner is used to heat material close to the glass liquid surface S by radiation, in order to achieve a better melting effect and control the temperature and atmosphere in the space above the glass liquid surface. Correspondingly, the burner R is configured to supply a portion of the energy used to heat and melt the glass other than the energy supplied by the submerged burners F and the electric heaters E; for example, this portion is 10%.

In an embodiment, one or more submerged burner F may be configured such that the fuel and oxidant supplied thereto are split into a first portion supplied continuously and a second portion supplied intermittently. That is, one portion (the first portion) of the fuel and oxidant is continuously supplied to the submerged burner, and the other portion (the second portion) of the fuel and oxidant is sent to the submerged burner only at intervals of a first predetermined duration in a pulsed manner, and supplied for a second predetermined duration. The function of the continuously supplied first portion of the fuel and oxidant is to maintain the flame of the submerged burner, and prevent glass melt from flowing back into the nozzle of the submerged burner. Thus, the flow rate (pressure) of the first portion may be less than the flow rate (pressure) of the second portion. The intermittently supplied second portion of the fuel and oxidant and corresponding combustion products can enhance the agitating and mixing effect on the glass melt, improving the level of homogenization of the glass liquid. In addition, compared with continuously supplying fuel and oxidant at a higher flow rate, this type of pulsed intermittent supply can avoid or mitigate violent collisions and rupture between combustion gases and between the bubbles produced, thereby reducing the possibility of a greater number of difficult-to-remove tiny bubbles being formed by splitting in the glass melt, and helping to reduce the bubble rate in the final glass product. Preferably, a ratio of flow rates of the first portion and second portion of the fuel and oxidant supplied is adjustable, and/or a supply frequency (determined by the first predetermined duration mentioned above) and/or supply duration (i.e. the second predetermined duration mentioned above) of the second portion of fuel and oxidant is adjustable. Thus, the generation of bubbles in the glass melt can be regulated adaptively according to different scenarios and demands.

Advantageously, the submerged burners F may use hydrogen as fuel. Hydrogen has many advantages as a clean energy, but it has been found that the hydrogen flame is not bright when it is used as a fuel, the radiance is low, and there is a problem of low heat transfer efficiency in heating. In a submerged burner, due to the characteristics of convection and conduction of heat by direct contact in submerged combustion, the heat of the hydrogen flame can be fully transferred in the material being heated, and thus the thermal energy of hydrogen combustion can be better utilized. The use of hydrogen as fuel for submerged burners also has the following advantages: water is the only product of its oxidative combustion, so emissions of CO₂ generated in the combustion process can be reduced; in addition, glass melt, for example, needs to be clarified to eliminate bubbles therein, but when hydrogen is used as fuel, the partial pressure of the gaseous water produced is different from that of other gases present in the glass, and consequently the bubbles of these gases are more easily absorbed and merged to form large bubbles which are then discharged; furthermore, the numerous OH⁻ produced by hydrogen combustion can reduce tension in the glass liquid surface around large and small bubbles of various kinds, which can also make it easier for gases in the bubbles to escape from the glass. All of these advantages of hydrogen make it suitable for use as fuel for submerged burners in material melting. In an embodiment, as shown in Fig. 3, multiple submerged burners F protruding into the glass melt may be provided on the bottom wall 120 of the glass melting furnace 100, including multiple (shown as three in the figure as an example) submerged burners F1, F2, F3 which protrude from the bottom wall and whose heights increase successively in the melt flow direction (i.e. substantially the direction from left to right in Fig. 3). Such a layout of arranging the multiple submerged burners aids the formation, in the glass melt, of a melt flow that gradually rises in the melt flow direction. Such a flow direction of glass melt helps to increase the flow path of the glass melt in the melting space, thereby lengthening the duration of glass liquid clarification and homogenization; furthermore, the flow of glass melt carrying bubbles in such a way that it gradually rises toward the glass liquid surface S is also more conducive for the escape of bubbles from the liquid surface S. Those skilled in the art will understand that, by appropriately setting the protrusion heights and spacing of the submerged burners as well as the power ratio relative to each other, it is also possible to make the glass melt flow along other suitable paths in the melting space as required.

As an alternative or additional solution to the above-described layout of arranging the submerged burners F1, F2, F3, multiple (also shown as three in the figure as an example) protrusions C1, C2, C3 protruding into the glass melt may also be provided on the bottom wall 120 in an upstream region of the glass melting furnace 100 as shown in Fig. 4, wherein the heights of the multiple protrusions also increase successively in the melt flow direction. Such a configuration can likewise produce a melt flow that gradually rises in the melt flow direction, and achieve the abovementioned effect similar to the layout of arranging the submerged burners shown in Fig. 4. In such a configuration, corresponding submerged burners (not shown) may protrude from top ends of the protrusions C1, C2, C3, and corresponding cooling medium nozzles or pipelines L may be provided in the protrusions to cool the corresponding submerged burners.

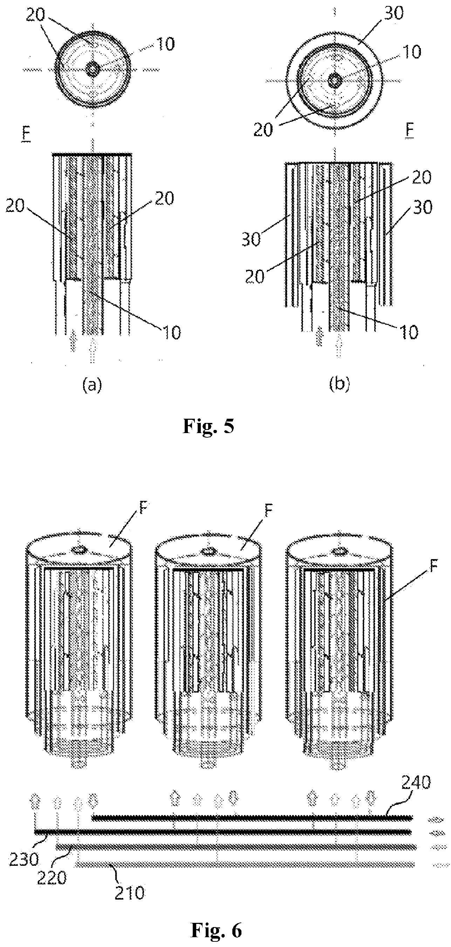

Specific configurations of the submerged burners F that may be used in the glass melting furnace 100 used according to the present invention are now described. Parts (a) and (b) of Fig. 5 show top views and longitudinal sections of two exemplary submerged burners F, respectively. These submerged burners each comprise a fuel pathway 10 connected to a fuel supply source, and an oxidant pathway 20 connected to an oxidant supply source. The fuel pathway 10 and oxidant pathway 20 may be configured to respectively discharge fuel and oxidant to the outside of the submerged burner F, so that the fuel and oxidant mix outside. For example, in the embodiment shown, the fuel pathway 10 and the oxidant pathway 20 may extend parallel to an axis of the burner all the way to a nozzle at an extremity of the submerged burner. That is, the fuel and oxidant may not undergo pre-mixing before being ejected from the nozzle. Since the submerged burner extends into the glass melt, the high temperature in the melt enables the fuel and oxidant, which are mixed only when outside the nozzle, to also rapidly ignite. Furthermore, in the case where hydrogen is used as the fuel, the combustion of the hydrogen and oxidant (e.g. oxygen) has a very short reaction time, which is also conducive for their rapid combustion. Of course, at least one of the fuel pathway 10 and the oxidant pathway 20 may also be configured such that the discharged fuel and/or oxidant forms a rotational flow, so that they are mixed better. For example, a helical groove may be provided in an inner wall of the fuel pathway 10 and/or oxidant pathway 20, so that the correspondingly discharged fuel and/or oxidant forms a rotational flow. The submerged burner F shown in part (b) of Fig. 5 differs from the submerged burner F shown in part (a) in that a cooling jacket 30 allowing circulation of a cooling medium is further provided around the periphery of the submerged burner in part (b), for the purpose of cooling the submerged burner.

Also advantageously, two or more submerged burners F may be provided. For a fixed amount of heat required to be provided, a larger number of submerged burners can reduce the power of each submerged burner. The lower power of each submerged burner enables the flame produced thereby to be shorter, so as to transfer heat more fully into the glass liquid. The bubbles generated by the lower-power submerged burner in the glass melt are also fewer and smaller. **In** an embodiment, the two or more submerged burners F mentioned above may share a cooling system and/or a system for supplying fuel and oxidant, and thereby form a burner assembly. As shown in Fig. 6, a burner assembly formed by, for example, three submerged burners may be connected to a common fuel pipeline 210 and a common oxidant pipeline 220 so as to receive supplied fuel and oxidant, and may be connected to a common cooling medium inflow pipe 230 and a common cooling medium outflow pipe 240 so as to utilize the same cooling system for cooling.

Those skilled in the art will understand that the embodiments described above are all exemplary, and those skilled in the art may make improvements to them.

After the detailed explanation of preferred embodiments of the present invention, those skilled in the art will clearly understand that the present invention is not limited to the embodiments described by way of example herein.

## Claims

1. Use of a melting device (100) for melting a material, the melting device (100) comprising a melting space in which the material is melted and which is enclosed by at least a bottom wall (120) and a side wall (130), the melting device (100) further comprising at least one electric heater (E) and at least one submerged burner (F) disposed in the melting space to heat the material, **characterized in that** the at least one submerged burner (F) and the at least one electric heater (E) are configured such that a hot point (K) in the melting space is located downstream of the at least one submerged burner (F) in a melt flow direction, the melt flow direction being a direction in which the material melt flows in the melting space and is discharged from the melting space.

2. The use as claimed in claim 1, **characterized in that**, in the melt flow direction, the at least one submerged burner (F) is disposed upstream of the at least one electric heater (E).

3. The use as claimed in claim 1 or 2, **characterized in that** the at least one submerged burner (F) and the at least one electric heater (E) are configured such that, of the energy used to heat and melt the material, 50% or more and preferably 70% - 80% comes from the at least one electric heater, and less than 50% and preferably less than 20% comes from the at least one submerged burner.

4. The use as claimed in claim 3, **characterized in that** the melting device (100) further comprises a burner (R) disposed above a surface (S) of the material melt, said burner (R) being configured to supply a portion of the energy used to heat and melt the material other than energy supplied by the at least one submerged burner (F) and the at least one electric heater (E).

5. The use as claimed in any one of claims 1 - 4, **characterized in that** the at least one submerged burner (F) is configured such that fuel and oxidant supplied thereto are split into a first portion supplied continuously and a second portion supplied intermittently, a flow rate of the first portion being less than a flow rate of the second portion, and preferably, a ratio of flow rates of the first portion and the second portion being adjustable, and/or a supply frequency and/or supply duration of the second portion being adjustable.

6. The use as claimed in any one of claims 1 - 5, **characterized in that** the at least one submerged burner (F) uses hydrogen as fuel.

7. The use as claimed in any one of claims 1 - 6, **characterized in that** the at least one submerged burner (F) comprises multiple submerged burners (F1, F2, F3) protruding from the bottom wall (120) into the material melt, and heights to which the multiple submerged burners (F1, F2, F3) protrude from the bottom wall (120) increase successively in the melt flow direction.

8. The use as claimed in any one of claims 1 - 7, **characterized in that** upstream of the at least one electric heater (E), the bottom wall (120) comprises multiple protrusions (C1, C2, C3) protruding into the material melt, and heights of the multiple protrusions increase successively in the melt flow direction.

9. The use as claimed in claim 8, **characterized in that** the at least one submerged burner (F) extends from a top end of each said protrusion (C1, C2, C3).

10. The use as claimed in claim 9, **characterized in that** a cooling medium nozzle or pipeline (L) for cooling the submerged burner (F) is accommodated in the protrusions (C1, C2, C3).

11. The use as claimed in any one of claims 1 - 10, **characterized in that** the at least one submerged burner (F) comprises two or more submerged burners, which share a cooling system and/or a system for supplying fuel and oxidant.

12. The use as claimed in any one of claims 1 - 11, **characterized in that** the material melt is molten glass, molten metal, molten resin, or solid waste in a molten state.

13. The use as claimed in any one of claims 1 - 12, **characterized in that** each submerged burner (F) comprises a fuel pathway (10) and an oxidant pathway (20), which are configured to respectively discharge fuel and oxidant to the outside of the submerged burner (F) so that the fuel and oxidant mix outside.

14. The use as claimed in claim 13, **characterized in that** at least one of the fuel pathway (10) and the oxidant pathway (20) is configured such that the discharged fuel and/or oxidant forms a rotational flow.

## Patentansprüche

1. Verwendung einer Schmelzvorrichtung (100) zum Schmelzen eines Materials, wobei die Schmelzvorrichtung (100) einen Schmelzraum umfasst, in dem das Material geschmolzen wird und der von mindestens einer Bodenwand (120) und einer Seitenwand (130) umschlossen ist, wobei die Schmelzvorrichtung (100) ferner mindestens eine elektrische Heizeinrichtung (E) und mindestens einen Tauchbrenner (F) umfasst, die im Schmelzraum angeordnet sind, um das Material zu erhitzen, **dadurch gekennzeichnet, dass** der mindestens eine Tauchbrenner (F) und die mindestens eine elektrische Heizeinrichtung (E) so konfiguriert sind, dass sich ein Heißpunkt (K) im Schmelzraum stromabwärts des mindestens einen Tauchbrenners (F) in einer Schmelzflussrichtung befindet, wobei die Schmelzflussrichtung eine Richtung ist, in der die Materialschmelze im Schmelzraum fließt und aus dem Schmelzraum abgeführt wird.

2. Verwendung nach Anspruch 1, **dadurch gekennzeichnet, dass** in der Schmelzflussrichtung der mindestens eine Tauchbrenner (F) stromaufwärts der mindestens einen elektrischen Heizeinrichtung (E) angeordnet ist.

3. Verwendung nach Anspruch 1 oder 2, **dadurch gekennzeichnet, dass** der mindestens eine Tauchbrenner (F) und die mindestens eine elektrische Heizeinrichtung (E) so konfiguriert sind, dass von der zum Erhitzen und Schmelzen des Materials verwendeten Energie 50% oder mehr und vorzugsweise 70% - 80% von der mindestens einen elektrischen Heizeinrichtung stammen und weniger als 50% und vorzugsweise weniger als 20% von dem mindestens einen Tauchbrenner stammen.

4. Verwendung nach Anspruch 3, **dadurch gekennzeichnet, dass** die Schmelzvorrichtung (100) ferner einen Brenner (R) umfasst, der über einer Oberfläche (S) der Materialschmelze angeordnet ist, wobei der Brenner (R) so konfiguriert ist, dass er einen Teil der zum Erhitzen und Schmelzen des Materials verwendeten Energie liefert, der sich von der von dem mindestens einen Tauchbrenner (F) und der mindestens einen elektrischen Heizeinrichtung (E) gelieferten Energie unterscheidet.

5. Verwendung nach einem der Ansprüche 1 - 4, **dadurch gekennzeichnet, dass** der mindestens eine Tauchbrenner (F) so konfiguriert ist, dass der ihm zugeführte Brennstoff und das Oxidationsmittel in einen ersten, kontinuierlich zugeführten Teil und einen zweiten, intermittierend zugeführten Teil aufgeteilt werden, wobei eine Durchflussrate des ersten Teils geringer ist als eine Durchflussrate des zweiten Teils und vorzugsweise ein Verhältnis der Durchflussraten des ersten Teils und des zweiten Teils einstellbar ist und/oder eine Zufuhrfrequenz und/oder Zufuhrdauer des zweiten Teils einstellbar ist.

6. Verwendung nach einem der Ansprüche 1 - 5, **dadurch gekennzeichnet, dass** der mindestens eine Tauchbrenner (F) Wasserstoff als Brennstoff verwendet.

7. Verwendung nach einem der Ansprüche 1 - 6, **dadurch gekennzeichnet, dass** der mindestens eine Tauchbrenner (F) mehrere Tauchbrenner (F1, F2, F3) umfasst, die von der Bodenwand (120) in die Materialschmelze hineinragen, und die Höhen, bis zu denen die mehreren Tauchbrenner (F1, F2, F3) von der Bodenwand (120) vorstehen, in der Schmelzflussrichtung sukzessive zunehmen.

8. Verwendung nach einem der Ansprüche 1 - 7, **dadurch gekennzeichnet, dass** stromaufwärts der mindestens einen elektrischen Heizeinrichtung (E) die Bodenwand (120) mehrere Vorsprünge (C1, C2, C3) aufweist, die in die Materialschmelze hineinragen, und die Höhen der mehreren Vorsprünge in der Schmelzflussrichtung sukzessive zunehmen.

9. Verwendung nach Anspruch 8, **dadurch gekennzeichnet, dass** sich der mindestens eine Tauchbrenner (F) von einem oberen Ende jedes der Vorsprünge (C1, C2, C3) erstreckt.

10. Verwendung nach Anspruch 9, **dadurch gekennzeichnet, dass** eine Kühlmediumdüse oder -leitung (L) zum Kühlen des Tauchbrenners (F) in den Vorsprüngen (C1, C2, C3) untergebracht ist.

11. Verwendung nach einem der Ansprüche 1 - 10, **dadurch gekennzeichnet, dass** der mindestens eine Tauchbrenner (F) zwei oder mehr Tauchbrenner umfasst, die sich ein Kühlsystem und/oder ein System zur Zufuhr von Brennstoff und Oxidationsmittel teilen.

12. Verwendung nach einem der Ansprüche 1 - 11, **dadurch gekennzeichnet, dass** die Materialschmelze geschmolzenes Glas, geschmolzenes Metall, geschmolzenes Harz oder fester Abfall in einem geschmolzenen Zustand ist.

13. Verwendung nach einem der Ansprüche 1 - 12, **dadurch gekennzeichnet, dass** jeder Tauchbrenner (F) einen Brennstoffweg (10) und einen Oxidationsmittelweg (20) umfasst, die so konfiguriert sind, dass sie jeweils Brennstoff und Oxidationsmittel an die Außenseite des Tauchbrenners (F) abgeben, so dass sich der Brennstoff und das Oxidationsmittel außen mischen.

14. Verwendung nach Anspruch 13, **dadurch gekennzeichnet, dass** mindestens einer von dem Brennstoffweg (10) und dem Oxidationsmittelweg (20) so konfiguriert ist, dass der abgegebene Brennstoff und/oder das abgegebene Oxidationsmittel eine Rotationsströmung bildet.

## Revendications

1. Utilisation d'un dispositif de fusion (100) pour faire fondre un matériau, le dispositif de fusion (100) comprenant un espace de fusion dans lequel le matériau est fondu et qui est délimité par au moins une paroi de fond (120) et une paroi latérale (130), le dispositif de fusion (100) comprenant en outre au moins un réchauffeur électrique (E) et au moins un brûleur immergé (F) disposés dans l'espace de fusion pour chauffer le matériau, **caractérisée en ce que** l'au moins un brûleur immergé (F) et l'au moins un réchauffeur électrique (E) sont configurés de telle sorte qu'un point chaud (K) dans l'espace de fusion est situé en aval de l'au moins un brûleur immergé (F) dans une direction d'écoulement de la masse fondue, la direction d'écoulement de la masse fondue étant une direction dans laquelle la masse fondue du matériau s'écoule dans l'espace de fusion et est évacuée de l'espace de fusion.

2. Utilisation selon la revendication 1, **caractérisée en ce que**, dans la direction d'écoulement de la masse fondue, l'au moins un brûleur immergé (F) est disposé en amont de l'au moins un réchauffeur électrique (E).

3. Utilisation selon la revendication 1 ou 2, **caractérisée en ce que** l'au moins un brûleur immergé (F) et l'au moins un réchauffeur électrique (E) sont configurés de telle sorte que, de l'énergie utilisée pour chauffer et faire fondre le matériau, 50% ou plus et de préférence 70% - 80% proviennent de l'au moins un réchauffeur électrique, et moins de 50% et de préférence moins de 20% proviennent de l'au moins un brûleur immergé.

4. Utilisation selon la revendication 3, **caractérisée en ce que** le dispositif de fusion (100) comprend en outre un brûleur (R) disposé au-dessus d'une surface (S) de la masse fondue du matériau, ledit brûleur (R) étant configuré pour fournir une partie de l'énergie utilisée pour chauffer et faire fondre le matériau autre que l'énergie fournie par l'au moins un brûleur immergé (F) et l'au moins un réchauffeur électrique (E).

5. Utilisation selon l'une quelconque des revendications 1 à 4, **caractérisée en ce que** l'au moins un brûleur immergé (F) est configuré de telle sorte que le combustible et l'oxydant qui y sont fournis sont divisés en une première partie fournie en continu et une seconde partie fournie par intermittence, un débit de la première partie étant inférieur à un débit de la seconde partie, et de préférence, un rapport des débits de la première partie et de la seconde partie étant réglable, et/ou une fréquence d'alimentation et/ou une durée d'alimentation de la seconde partie étant réglables.

6. Utilisation selon l'une quelconque des revendications 1 à 5, **caractérisée en ce que** l'au moins un brûleur immergé (F) utilise de l'hydrogène comme combustible.

7. Utilisation selon l'une quelconque des revendications 1 à 6, **caractérisée en ce que** l'au moins un brûleur immergé (F) comprend plusieurs brûleurs immergés (F1, F2, F3) faisant saillie de la paroi de fond (120) dans la masse fondue du matériau, et les hauteurs auxquelles les multiples brûleurs immergés (F1, F2, F3) font saillie de la paroi de fond (120) augmentent successivement dans la direction d'écoulement de la masse fondue.

8. Utilisation selon l'une quelconque des revendications 1 à 7, **caractérisée en ce que**, en amont de l'au moins un réchauffeur électrique (E), la paroi de fond (120) comprend de multiples saillies (C1, C2, C3) faisant saillie dans la masse fondue du matériau, et les hauteurs des multiples saillies augmentent successivement dans la direction d'écoulement de la masse fondue.

9. Utilisation selon la revendication 8, **caractérisée en ce que** l'au moins un brûleur immergé (F) s'étend à partir d'une extrémité supérieure de chacune desdites saillies (C1, C2, C3).

10. Utilisation selon la revendication 9, **caractérisée en ce qu'**une buse ou une conduite de fluide de refroidissement (L) pour refroidir le brûleur immergé (F) est logée dans les saillies (C1, C2, C3).

11. Utilisation selon l'une quelconque des revendications 1 à 10, **caractérisée en ce que** l'au moins un brûleur immergé (F) comprend deux brûleurs immergés ou plus, qui partagent un système de refroidissement et/ou un système d'alimentation en combustible et en oxydant.

12. Utilisation selon l'une quelconque des revendications 1 à 11, **caractérisée en ce que** la masse fondue du matériau est du verre fondu, du métal fondu, de la résine fondue ou des déchets solides à l'état fondu.

13. Utilisation selon l'une quelconque des revendications 1 à 12, **caractérisée en ce que** chaque brûleur immergé (F) comprend un conduit de combustible (10) et un conduit d'oxydant (20), qui sont configurés pour décharger respectivement le combustible et l'oxydant à l'extérieur du brûleur immergé (F) de sorte que le combustible et l'oxydant se mélangent à l'extérieur.

14. Utilisation selon la revendication 13, **caractérisée en ce qu'**au moins l'un du conduit de combustible (10) et du conduit d'oxydant (20) est configuré de telle sorte que le combustible et/ou l'oxydant déchargé(s) forme(nt) un écoulement rotationnel.
